# EUROPEAN PATENT SPECIFICATION

(11) **EP 3 477 506 B1**
(45) Date of publication and mention of the grant of the patent: **01.05.2024**
(21) Application number: 17814638.7
(22) Date of filing: 14.06.2017
(51) Int. Cl.: G06V 20/40, G06F 18/22, G06V 10/44, G06V 10/46, G06V 10/74, G10L 25/54

(54) **VIDEO DETECTION METHOD, SERVER AND STORAGE MEDIUM**
VIDEOERKENNUNGSVERFAHREN, SERVER UND SPEICHERMEDIUM
PROCÉDÉ DE DÉTECTION VIDÉO, SERVEUR ET SUPPORT DE STOCKAGE

(30) Priority: 22.06.2016 CN 201610457780
(43) Date of publication of application: 01.05.2019
(73) Proprietor: Tencent Technology (Shenzhen) Company Limited, Shenzhen, Guangdong, 518057 (CN)
(72) Inventor: XU, Xuyuan, Shenzhen, Guangdong 518057 (CN)
(74) Representative: Eisenführ Speiser
(86) International application number: PCT/CN2017/088240
(87) International publication number: WO 2017/219900

(56) References cited:
- CN-A- 102 890 778
- CN-A- 103 051 925
- CN-A- 105 554 570
- CN-A- 106 126 617
- US-A1- 2015 365 722
- US-B2- 8 717 499
- TIAN YONGHONG ET AL: "Video Copy-Detection and Localization with a Scalable Cascading Framework", IEEE MULTIMEDIA, IEEE SERVICE CENTER, NEW YORK, NY, US, vol. 20, no. 3, 1 July 2013 (2013-07-01), pages 72-86, XP011525049, ISSN: 1070-986X, DOI: 10.1109/MMUL.2012.62 [retrieved on 2013-08-23]
- YONGHONG TIAN ET AL: "TASC", ACM TRANSACTIONS ON INFORMATION SYSTEMS, ASSOCIATION FOR COMPUTING MACHINERY, 2 PENN PLAZA, SUITE 701 NEW YORK NY 10121-0701 USA, vol. 33, no. 2, 17 February 2015 (2015-02-17), pages 1-34, XP058065801, ISSN: 1046-8188, DOI: 10.1145/2699662

## Description

This application claims priority to Chinese Patent Application No. 201610457780.1, filed with the Chinese Patent Office on June 22, 2016 and entitled "VIDEO DETECTION METHOD AND SERVER".

### FIELD OF THE TECHNOLOGY

The present disclosure relates to video data processing technologies, and in particular, to a video detection method, a server and a storage medium.

### BACKGROUND OF THE DISCLOSURE

Video copy detection becomes a hot topic researched by people to achieve copyright protection of digital videos. In the existing technology, usually, the following two solutions are used to detect whether a video involves copyright infringement. A first solution is to detect audio of the video. However, the same audio may exist in different videos having copyright, for example, music videos (MV). The copyright of the audio protects only audio data. Consequently, copyright protection for video data cannot be achieved by only the audio copyright protection. The second solution is to detect images of a video. Compared with the audio data, the video data has a large quantity of information. During detection, a large quantity of fingerprint features need to be calculated, so as to be compared with fingerprint features in a copyright library, which requires a high calculation capability and consumes a large quantity of calculation resources.

Y. Tian et al., "Video Copy-Detection and Localization with a Scalable Cascading Framework", IEEE Multimedia, Vol. 20, No. 3, July 2013, pages 72-86, discloses a novel video copy-detection and localization approach with scalable cascading of complementary detectors and multiscale sequence matching. The approach is described as being able to improve copy-detection accuracy and localization precision for most audio-visual transformations.

Y Tian et al., "TASC: A Transformation-Aware Soft Cascading Approach for Multimodal Video Copy Detection", ACM Transactions on Information Systems, Vol. 33, No. 2, February 2015, pages 1-34, is concerned with the problem of how to precisely and efficiently detect near-duplicate copies with complicated audiovisual transformations from a large-scale video database, which is a challenging task. To cope with this challenge, this article proposes a transformation-aware soft cascading (TASC) approach for multimodal video copy detection. Basically, the approach divides query videos into some categories and then for each category designs a transformation-aware chain to organize several detectors in a cascade structure.

### SUMMARY

To resolve a currently-existing technical problem, embodiments of the present disclosure provide a video detection method and a server, which can met the requirement of copyright protection on video data without requiring a high calculation capability and huge calculation resource consumption.

An embodiment of the present disclosure provides a video copyright detection method, including:
obtaining, by a server, first video data to be detected, and decoding, by the server, the first video data, to obtain audio data of the first video data;
analyzing, by the server, the audio data, to obtain audio fingerprint data corresponding to the audio data; and querying, by the server based on the audio fingerprint data, an audio fingerprint library;
obtaining, by the server, a video label and a time parameter corresponding to the audio fingerprint data if the audio fingerprint library includes the audio fingerprint data;
querying, by the server, a video copyright library using the video label, to obtain a first picture that is corresponding to the video label and that satisfies the time parameter, and extracting from the first video data a second picture that satisfies the time parameter;
extracting, by the server, a first feature parameter of the first picture and a second feature parameter of the second picture; and
comparing, by the server, the first feature parameter with the second feature parameter, and determining, based on a comparison result, whether the first video data is consistent with a video in the video copyright library,
where before the querying, by the server, a video copyright library using the video label, the method includes:
extracting, by the server, pictures from second video data having copyright, and, for each of the extracted pictures, storing the extracted picture, a time parameter corresponding to the picture, and a video label corresponding to the picture in the video copyright library,
where the extracting, by the server, pictures from second video data having copyright includes:
   performing, by the server, scene recognition on the second video data, and recognizing and filtering out a first picture collection representing scene switching in the second video data, to obtain a second picture collection;
   analyzing, by the server, pictures in the second picture collection, to obtain edge feature information of the picture in the second picture collection; and
   extracting, by the server, pictures of which a quantity of the edge feature information reaches a preset threshold.

In the foregoing solution, the extracting, by the server, pictures of which a quantity of the edge feature information reaches a preset threshold includes:
generating, by the server, a third picture collection of pictures each of which the quantity of the edge feature information reaches the preset threshold; and
extracting, by the server, pictures from the third picture collection at a preset time interval.

In the foregoing solution, the analyzing, by the server, the audio data, to obtain audio fingerprint data corresponding to the audio data includes:
extracting, by the server, a feature parameter of the audio data, and obtaining, based on the feature parameter, the audio fingerprint data corresponding to the audio data.

In the foregoing solution, the extracting, by the server, a first feature parameter of the first picture and a second feature parameter of the second picture includes: extracting the first feature parameter of the first picture and the second feature parameter of the second picture by at least one of the following methods:
a scale-invariant feature transform (SIFT) method and a histogram of oriented gradient (HOG) method.

In the foregoing solution, the comparing, by the server, the first feature parameter with the second feature parameter, and determining, based on a comparison result, whether the first video data is consistent with a video in the video copyright library includes:
calculating, by the server, similarity between the first feature parameter and the second feature parameter; and determining, by the server, that the first video data is consistent with the video in the video copyright library if the similarity reaches a preset threshold.

An embodiment of the present disclosure further provides a server, including: at least one processor and a memory storing a processor-executable instruction, the instruction, when executed by the at least one processor, causing the server to perform the foregoing video copyright detection method.

An embodiment of the present disclosure provides a non-volatile storage medium, storing one or more computer programs, the computer programs including an instruction that is executable by a possessor comprising one or more memories, the instruction, when executed by a computer, causing the computer to perform the foregoing video copyright detection method.

In the video copyright detection method and the server provided by the embodiments of the present disclosure, by combining audio content detection and video content detection, i.e., by primarily using audio content detection and secondarily using video content detection, as compared with the case that only video content detection is used, required calculation capabilities are greatly decreased, calculation resource consumption is reduced, and a shortcoming of copyright protection merely using an audio fingerprint is overcome, so as to meet a video copyright protection requirement.

### BRIEF DESCRIPTION OF THE DRAWINGS

FIG. 1 is a schematic flowchart of a video detection method according to an embodiment of the present disclosure;
FIG. 2a to FIG. 2d are schematic diagrams of generating audio fingerprint data according to an embodiment of the present disclosure;
FIG. 3 is a schematic diagram of a process for extracting and matching audio fingerprint data according to an embodiment of the present disclosure;
FIG. 4 is a schematic diagram of a process for establishing a video copyright library according to an embodiment of the present disclosure;
FIG. 5 is a schematic flowchart of another video detection method according to an embodiment of the present disclosure;
FIG. 6a and FIG. 6b are schematic diagrams of a system architecture applying a video detection method according to an embodiment of the present disclosure;
FIG. 7 is a schematic diagram of a structure of a server according to an embodiment of the present disclosure; and
FIG. 8 is a schematic diagram of a hardware structure of a server according to an embodiment of the present disclosure.

### DESCRIPTION OF EMBODIMENTS

With the development of Internet technologies, there are a growing number of video sharing platforms. A user may upload various video data, including an MV, a short video, a TV play, a movie, a variety show video, an animation video, and the like. A video sharing platform server performs copyright detection on the video data uploaded by the user. Usually, there is a video copyright database. If content of the uploaded video data is consistent with that of video data in the video copyright database, the uploaded video data involves a copyright conflict. Subsequently, an operation is performed on the video data involving the copyright conflict or an uploader. For example, the video data involving the copyright conflict is deleted, or a legal affair may arise on the uploaded under a serious circumstance. If the content of the uploaded video data is not consistent with that of the video data in the video copyright database, it may be determined that the video data is original video data made by the user. Copyright protection on original data may be provided for the user.

Based on this, the following embodiments of the present disclosure are provided. According to the technical solution of the embodiments of the present disclosure, a process of matching the uploaded video data with the video data in the video copyright database is described in detail.

The following describes the technical solution in detail with reference to the accompanying drawings and specific embodiments.

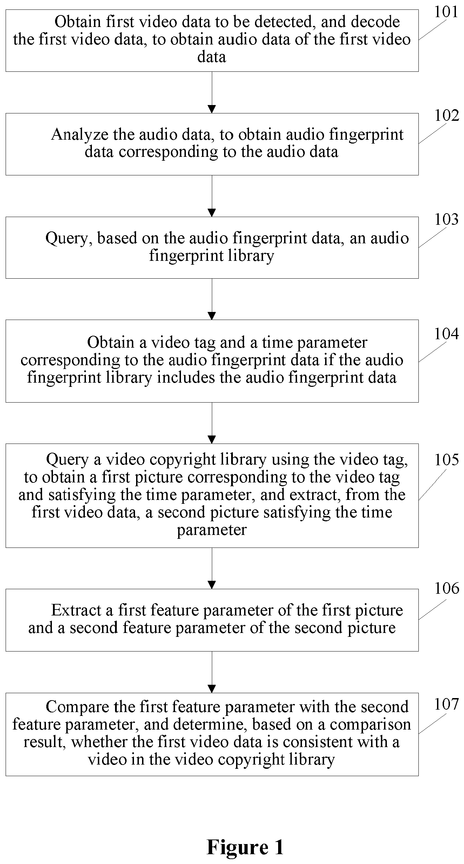

In an embodiment of the present disclosure, a video detection method is provided. FIG. 1 is a schematic flowchart of a video detection method according to an embodiment of the present disclosure. As shown in FIG. 1, the video detection method includes steps 101 to 107.

In step 101, first video data to be detected is obtained, and the first video data is decoded to obtain audio data of the first video data.

In step 102, the audio data is analyzed, to obtain audio fingerprint data corresponding to the audio data.

In step 103, based on the audio fingerprint data, an audio fingerprint library is queried.

In step 104, a video label and a time parameter corresponding to the audio fingerprint data are obtained if the audio fingerprint library includes the audio fingerprint data.

In step 105, a video copyright library is queried using the video label, to obtain a first picture that is corresponding to the video label and that satisfies the time parameter, and a second picture that satisfies the time parameter is extracted from the first video data.

In step 106, a first feature parameter of the first picture and a second feature parameter of the second picture are extracted.

In step 107, the first feature parameter is compared with the second feature parameter, and it is determined, based on a comparison result, whether the first video data is consistent with a video in the video copyright library.

The video detection method of this embodiment is applied to a video sharing platform server or server cluster.

In step 101 of this embodiment, the first video data is video data to be detected, which may be video data uploaded by a user, including an MV, a TV play, a movie, an animation video, or the like. The first video data is decoded to obtain the audio data of the first video data.

In step 102 of this embodiment, the audio data is analyzed to obtain the audio fingerprint data corresponding to the audio data. The audio fingerprint data may be quantized data representing a feature parameter of the audio data, and may be represented by using a binary value. The analyzing the audio data, to obtain audio fingerprint data corresponding to the audio data includes: extracting the feature parameter of the audio data, and obtaining based on the feature parameter, the audio fingerprint data corresponding to the audio data.

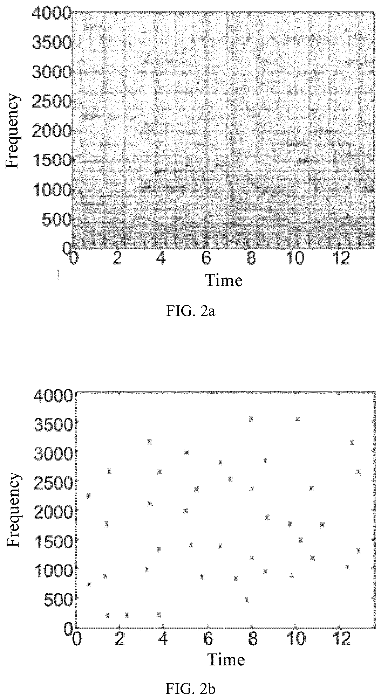

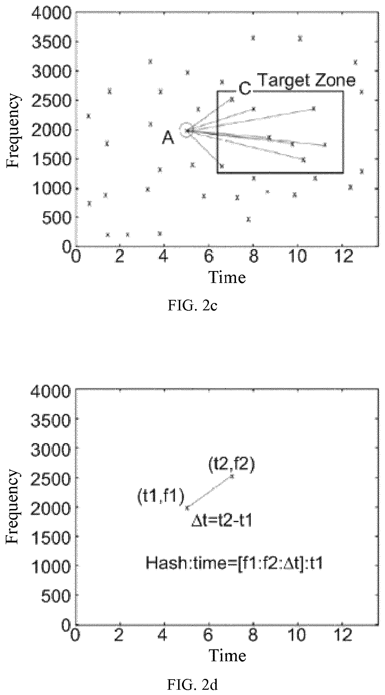

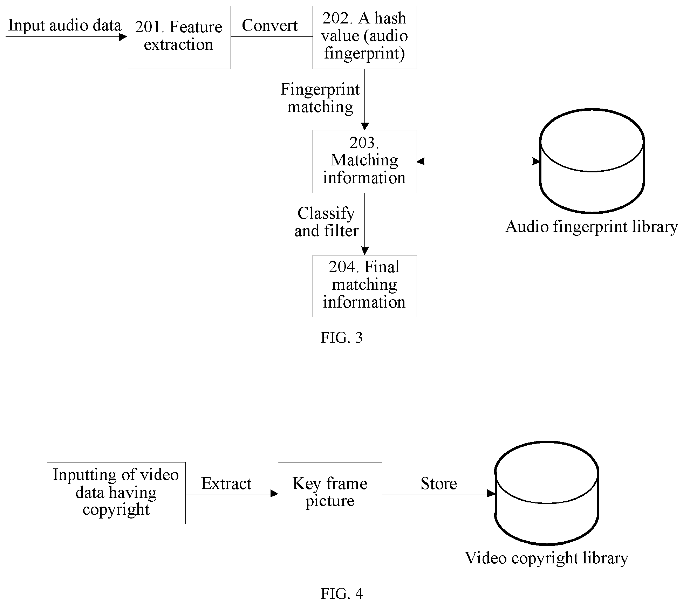

In an implementation, since audio is a type of sound wave, the feature parameter of the audio data may be presented by a sampling rate. FIG. 2a to FIG. 2d are schematic diagrams of a process of generating audio fingerprint data according to an embodiment of the present disclosure. FIG. 3 is a schematic diagram of a process for extracting and matching audio fingerprint data according to an embodiment of the present disclosure. As shown by step 201 and step 202 in FIG. 3, the sampling rate of the audio data is converted to be K samples/s. K is, for example, 8000. The collected audio data represented in one-dimensional time domain is converted into a two-dimensional time domain diagram by using a windowed Fourier transform, as shown in FIG. 2a. A significant feature point that is extracted in the two-dimensional time domain diagram shown in FIG. 2a is used as a significant feature. For example, feature points in FIG. 2b are obtained by searching peaks in a frequency spectrum. For each selected feature point, such as a feature point A as shown in FIG. 2c, a proper window, such as a window area 1 in FIG. 2c, is selected based on time and frequency to perform feature hash value conversion. For example, for the feature point A, coordinates of the feature point A are (f1, t1). A maximum feature point in a frequency domain corresponding to a time is selected in the window area 1, for example, a feature point C. Coordinates of the feature point C are (f2, t2). A hash value formed by the feature point C and the feature point A may be Hash: time=[f1:f2:Δt]:t1, where Δt=t2-t1. In this embodiment, the obtained hash value is represented as a binary value, and the binary data is the audio fingerprint data corresponding to the audio data.

Certainly, the method for obtaining audio fingerprint data in this embodiment of the present disclosure is not limited to the foregoing obtaining method, and another method for obtaining audio fingerprint data that represents an audio data feature falls within the protection scope of the embodiments of the present disclosure.

In step 103 of this embodiment, the audio fingerprint library records audio fingerprint data of video data having copyright, a corresponding video label, and a time parameter corresponding to the audio fingerprint data. The video label may be represented by using a video identification, for example, a sequence number or a code, for convenience of searching in the video copyright library using the video label. The audio fingerprint data in the audio fingerprint library may be obtained by performing audio data extraction on the video data having copyright using the method for extracting audio fingerprint data according to this embodiment of the present disclosure, which is not repeated herein.

In this embodiment, if the audio fingerprint library does not include the audio fingerprint data, it indicates that the first video data is not consistent with video data in the video copyright library. That is, it indicates that the first video data does not conflict with the video data having the copyright, in other words, the first video data does not involve a copyright conflict. Correspondingly, step 104 to step 107 are not performed, and a determining result indicating that the first video data is not consistent with the video data in the video copyright library may be directly obtained.

As shown by step 203 in FIG. 3, a video label and a time parameter corresponding to the audio fingerprint data are obtained as matching information if the audio fingerprint library includes the audio fingerprint data. The video label may be represented by using a video identification, for example, a sequence number or a code. In an actual application, the audio fingerprint library stores a large quantity of information. To reduce a matching time and increase a matching speed without losing accuracy, a fuzzy matching method is used in step 203. That is, in the matching processing, a mount of matching hashes having same audio fingerprint data and a same time difference (for example, a difference between a hash time point of inputting a video and a hash time point in the video copyright library (the video fingerprint library)) are counted, and the first N pieces of the matched audio fingerprint data are selected to form a potential matched audio segment. In a next stage, each segment of the matched audio fingerprint data is selected to analyze the density of a hash amount of the audio fingerprint data at a particular time. If the density is greater than a threshold, the segment is remained; otherwise, the segment is removed. Therefore, a hash value segment whose density is greater than the threshold is remained. In this process, a potential audio segment having a low matching density may be removed, thereby improving the matching accuracy. De-duplication selection is performed on the selected potential matching audio segment, so that for repeated audio matched in time, audio having a largest hash density is selected as final matching audio. For the matching process, one-to-one or one-to-many matching may be allowed. In this process, filtering may be performed when the hash density is analyzed, and only a segment of audio having the longest matching time is remained. The foregoing process may be referred to as a classification and filtering process, that is, step 204, in which the final matching information is obtained.

In step 105 of this embodiment, after the video label corresponding to the audio fingerprint data is obtained, the video copyright library is queried using the video label. The video copyright library records a key frame picture of video data having copyright, the video label, a time parameter corresponding to the key frame picture, and the like. The video copyright library is queried to obtain the first picture that is corresponding to the video label and that satisfies the time parameter, and the second picture that satisfies the time parameter is extracted from the first video data. In a process of matching picture content of video data, the video copyright library is queried according to the video label obtained by matching the audio fingerprint data, to obtain a picture collection corresponding to the video label. A picture (that is, the first picture) satisfying the time parameter obtained by matching the audio fingerprint data is read from the picture collection. Correspondingly, for the first video data, a picture (that is, the second picture) that satisfies the time parameter obtained by matching the audio fingerprint data is extracted from the first video data.

In this embodiment, the first feature parameter of the first picture and the second feature parameter of the second picture are extracted. The first feature parameter is compared with the second feature parameter to determine whether the first video data is consistent with video data in a copyright database. The extracting a first feature parameter of the first picture and a second feature parameter of the second picture includes: extracting the first feature parameter of the first picture and the second feature parameter of the second picture by at least one of the following methods: a Scale-Invariant Feature Transform (SIFT) method and a Histogram of Oriented Gradient (HOG) method. Further, the comparing the first feature parameter with the second feature parameter, and determining, based on a comparison result, whether the first video data is consistent with a video in the video copyright library includes: calculating similarity between the first feature parameter and the second feature parameter by using the SIFT method or the HOG method; and determining that the first video data is consistent with the video in the video copyright library if the similarity reaches a preset threshold.

According to the invention, before the video copyright library is queried using the video label, in other words, in a process of establishing the video copyright library, the method includes: extracting a picture from second video data having copyright, and storing the extracted picture, a time parameter corresponding to the picture, and a video label corresponding to the picture in the video copyright library.

The extracting a picture from second video data having copyright includes: performing scene recognition on the second video data, recognizing and filtering out a first picture collection representing scene switching in the second video data, to obtain a second picture collection; analyzing a picture in the second picture collection, to obtain edge feature information of the picture; and extracting a picture of which a quantity of the edge feature information reaches a preset threshold.

In the process of establishing the video copyright library, key frame picture extraction is performed on all video data having copyright. FIG. 4 is a schematic diagram of a process for establishing a video copyright library according to an embodiment of the present disclosure. As shown in FIG. 4, the video data having copyright is input and a key frame picture of the input video data is extracted. A process of extracting the key frame picture of the video data includes: first, performing scene switching detection on the video data. The scene switching detection may be performed by detecting a foreground and/or a background in the picture. If it is detected that the foregrounds and/or backgrounds of two pictures are inconsistent, it may be determined that a time point between time points corresponding to the two pictures is a scene switching time point. It may also be understood as that a first picture having an early time is the last picture of the previous scene, and the other picture having a later time is the first picture of a next scene. In this embodiment, scene recognition is performed on the input video data, and a first picture collection representing scene switching is recognized. In the process of extracting the key frame picture, first, the first picture collection is filtered out from a picture collection included in the video data, to prevent that an extracted key frame picture is at a scene switching position which may reduce accuracy of subsequent picture content matching. Further, analysis is performed on remaining pictures in the second picture collection. The complexity of the pictures is analyzed, to extract a picture with high complexity as a key frame picture. In an implementation, picture edge feature information may be analyzed in this embodiment of the present disclosure to find out, in the second picture collection, a picture that has a large quantity of the edge feature information as the key frame picture. This is because a larger quantity of the edge feature information of a picture indicates higher complexity of the picture. In a process of matching two pictures, more complex content leads to higher matching accuracy.

In an implementation, the extracting a picture of which a quantity of the edge feature information reaches a preset threshold includes: generating a third picture collection of pictures each of which the quantity of the edge feature information reaches the preset threshold; and extracting pictures from the third picture collection at a preset time interval.

In this embodiment, there may be many pictures of which the quantity of the edge feature information is large. To reduce picture storage space and a calculation amount of feature matching, a picture may be extracted as a key frame picture at the preset time interval. For example, one picture is extracted every K second. This may greatly reduce a quantity of the extracted key frame pictures, greatly reduce quantity of stored pictures and the calculation amount of feature matching, and reduce consumed calculation resources of a server.

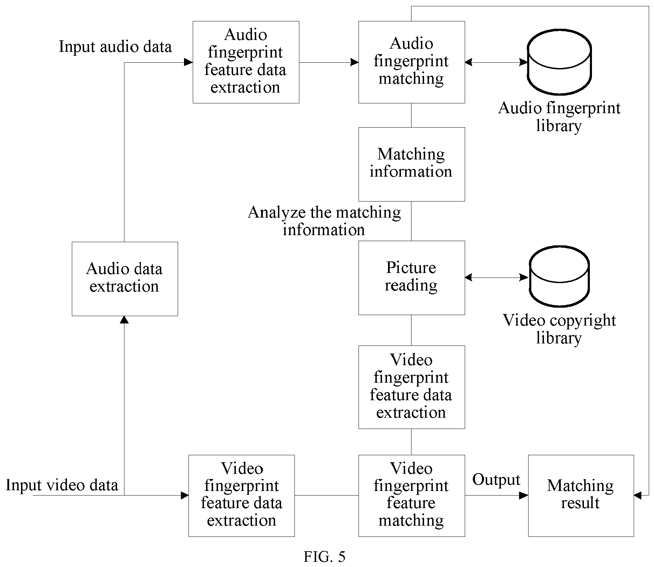

Based on the video detection solution described above, in short, the technical solution of this embodiment of the present disclosure is implemented by primarily using audio content detection and secondarily using video content detection. In other words, detection of audio content and video content are combined to determine whether a video to be detected involves copyright conflict. FIG. 5 is a schematic flowchart of another video detection method according to an embodiment of the present disclosure. As shown in FIG. 5, first, audio data is extracted from video data to be detected. First, it is determined whether the audio data is consistent with audio data of video data having copyright. Audio fingerprint data of the audio data is matched with audio fingerprint data in the audio fingerprint library. If the audio fingerprint data of the audio data does not match the audio fingerprint data in the audio fingerprint library, matching result is determined as that the video to be detected does not conflict with the video having the copyright. If the audio fingerprint data of the audio data matches the audio fingerprint data in the audio fingerprint library, a video label and a time parameter corresponding to the audio fingerprint data are obtained from the audio fingerprint library. Content of the video to be detected is further matched with content of the video in a video copyright library. The video copyright library is queried using the video label to obtain a video source. A first picture satisfying the time parameter is obtained from the video source. A picture is extracted from the video to be detected according to the time parameter to be used as a second picture. Fingerprint feature extraction is performed on the first picture and the second picture. Feature extraction may be performed by a SIFT method. Then, feature matching is performed, and similarity between the two pictures is calculated. If the calculated similarity reaches a preset threshold, it indicates that the similarity between the two pictures is high, so that a matching result is determined as that the video to be detected conflicts with the video having copyright. If the calculated similarity does not reach a preset threshold, it indicates that the similarity between the two pictures is low, so that the matching result is determined as that the video to be detected does not conflict with the video having copyright.

If the matching result is that the video to be detected does not conflict with the video having copyright, it may be determined that the video data is original video data made by a user and copyright protection on original data and sharing of advertising revenue may be provided for the user, to encourage excellent video data makers, thereby providing better video content for the video sharing platform. If the matching result is that the video to be detected conflict with the video having copyright, the video data to be detected involves copyright conflict. Subsequently, an operation is performed on the video data involving copyright conflict or an uploader. For example, the video data involving the copyright conflict is deleted, or a legal affair arises on the uploaded under a serious circumstance. Therefore, copyright protection is provided for video data having copyright effectively.

In the existing technology, detection solutions based on video content usually includes two of the following: 1. a space color-based video fingerprint; 2. a feature extraction- based video fingerprint.

The space color-based video fingerprint basically is a histogram of a picture in a time period in a particular area. A feature of a color varies with different formats of a video. Consequently, the color-based video fingerprint does not have a high anti-noise capability to, for example, changes such as added brand or black border.

A two-dimensional discrete cosine transform (2D-DCT) video fingerprint is representative of the feature-based video fingerprint. The 2D-DCT video fingerprint is widely applied to hash-based image retrieval. The hash-based image retrieval includes the following main steps. First, frame rate transforming is performed on a video in the time domain, so that the frame rate is changed into a low frame rate F (F=4). Subsequently, pictures are scaled down and then are changed into black and white pictures. The changed black and white pictures form a small segment (for example, a slice formed by J pictures) in a time domain of the video in a time length. Subsequently, TIRI is used to combine information continuous pictures in each slice in the time domain, to obtain one picture. Next, the 2D-DCT (for example, an 8×8 DCT) is performed on the obtained picture representing the information in the time domain. A median value is found in the transformed DCT values. A transformed fingerprint is changed into a two-dimensional vector by using a two-dimensional median value, thereby representing a feature of the video in an area.

The video detection solution based on space color has poor accuracy and anti-noise capability. The video detection solution based on feature requires a high calculation capability and consumes a large quantity of calculation resources. Compared with the existing video detection solution, in the video detection solution of this embodiment of the present disclosure, the audio fingerprint detection is primarily used and the video fingerprint detection is secondarily used. As compared with the case that only video content detection is used, this greatly decreases required calculation capabilities and reduces calculation resource consumption while overcoming the shortcoming of copyright protection merely using an audio fingerprint, so as to meet a video copyright protection requirement.

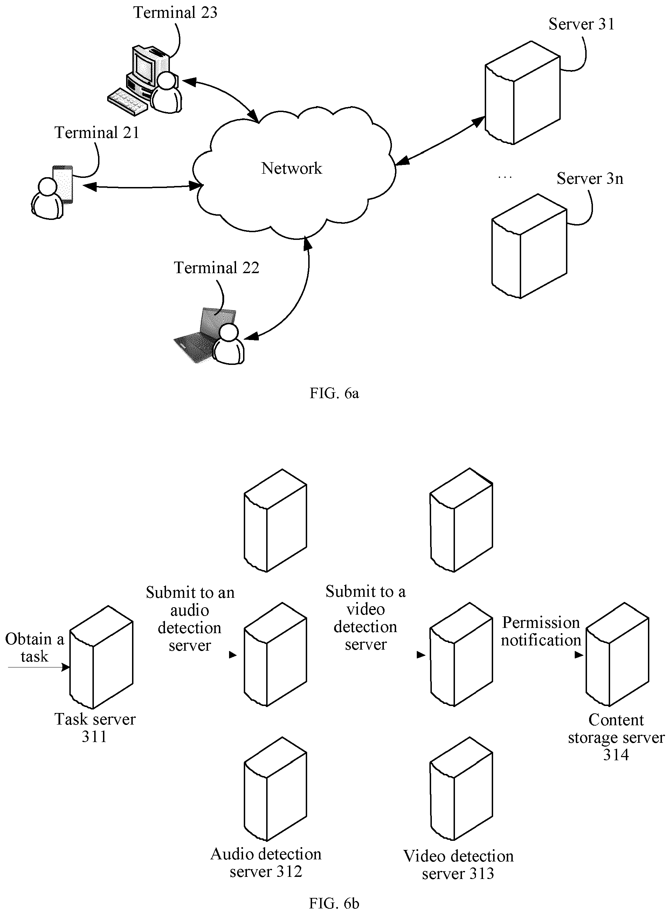

FIG. 6a and FIG. 6b are schematic diagrams of a system architecture applying a video detection method according to an embodiment of the present disclosure. As shown in FIG. 6a, the system includes servers 31, ..., 3n and terminal devices 21-23. The terminal devices 21-23 may interact with the server through a network. The terminal devices 21-23 may include a mobile phone, a desktop computer, a notebook computer, and the like. The servers 31, ..., 3n may be a server cluster of a video sharing platform, and the server cluster may be implemented as shown in FIG. 6b. As shown in FIG. 6b, the server cluster includes a task server 311, an audio detection server 312, a video detection server 313, and a content storage server 314. After the terminal device uploads video data, the task server 311 obtains the video data and initiates a detection task. The task is submitted to the audio detection server 312 to perform audio detection and compare the video data with existing content having audio copyright. The audio detection server 313 finds videos having copyright and having the same audio data and obtains matching information. Further, the matching information is submitted to the video detection server 313. Subsequently, video content detection is performed on the input video and these videos having copyright and having the same audio data, thereby determining whether the inputted video have the same audio and video as the existing videos. A determining result is stored in the content storage server 314. Finally, a related staff may perform a series of work related to the copyright based on content stored in the content storage server 314, such as raising a legal affair.

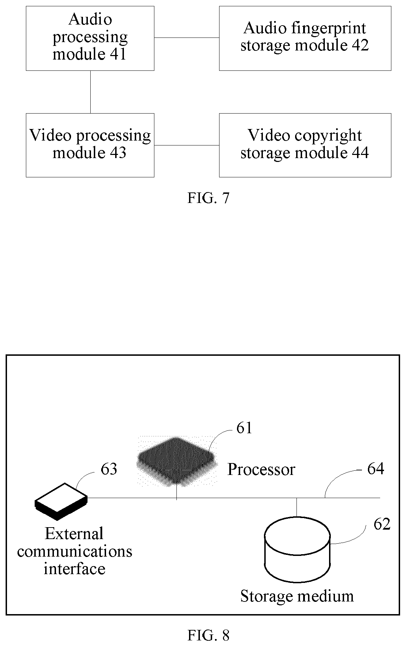

An embodiment of the present disclosure further provides a server. FIG. 7 is a schematic diagram of a structure of a server according to an embodiment of the present disclosure. As shown in FIG. 7, the server includes: an audio processing module 41, an audio fingerprint storage module 42, a video processing module 43, and a video copyright storage module 44.

The audio processing module 41 is configured to: obtain first video data to be detected; decode the first video data, to obtain audio data of the first video data; analyze the audio data, to obtain audio fingerprint data corresponding to the audio data; and is further configured to: query, based on the audio fingerprint data, the audio fingerprint storage module 42; and obtain a video label and a time parameter corresponding to the audio fingerprint data if an audio fingerprint library includes the audio fingerprint data.

The audio fingerprint storage module 42 is configured to store the audio fingerprint data, and the corresponding video label and time parameter.

The video processing module 43 is configured to: query the video copyright storage module 44 using the video label, to obtain a first picture that is corresponding to the video label and that satisfies the time parameter, and extract from the first video data a second picture that satisfies the time parameter; extract a first feature parameter of the first picture and a second feature parameter of the second picture; and compare the first feature parameter with the second feature parameter, and determine, based on a comparison result, whether the first video data is consistent with a video in the video copyright library.

The video copyright storage module 44 is configured to store the video label, and the corresponding picture and time parameter.

The server in this embodiment may be an independent server or a server cluster. Based on the system architecture shown in FIG. 6a and FIG. 6b, modules in this embodiment may be implemented by using any server or server cluster in the system architecture. The server cluster may be servers shown in FIG. 6b.

In this embodiment, the first video data is video data to be detected, which may be video data uploaded by a user, including an MV, a TV play, a movie, an animation video, or the like. The audio processing module 41 decodes the obtained first video data to separate the audio data of the first video data.

In this embodiment, the audio processing module 41 analyzes the audio data to obtain the audio fingerprint data corresponding to the audio data. The audio fingerprint data may be quantized data representing a feature parameter of the audio data, and may be represented by using a binary value. The audio processing module 41 is configured to extract a feature parameter of the audio data, and obtain, based on the feature parameter, the audio fingerprint data corresponding to the audio data.

In an implementation, since audio is a type of sound wave, the feature parameter of the audio data may be presented by a sampling rate. As shown in FIG. 3, the sampling rate of the audio data is converted to be K samples/s. K is, for example, 8000. The collected audio data represented in one-dimensional time domain is converted into a two-dimensional time domain diagram by using a windowed Fourier transform, as shown in FIG. 2a. A significant feature point that is extracted in the two-dimensional time domain diagram shown in FIG. 2a is used as a significant feature. For example, feature points in FIG. 2b are obtained by searching peaks in a frequency spectrum. For each selected feature point, such as a feature point A as shown in FIG. 2c, a proper window, such as a window area 1 in FIG. 2c, is selected based on time and frequency to perform feature hash value conversion. For example, for the feature point A, coordinates of the feature point A are (f1, t1). A maximum feature point in a frequency domain corresponding to a time is selected in the window area 1, for example, a feature point C. Coordinates of the feature point C are (f2, t2). A hash value formed by the feature point C and the feature point A may be Hash: time=[f1:f2:Δt]:t1, where Δt=t2-t1. In this embodiment, the obtained hash value is represented as a binary value, and the binary data is the audio fingerprint data corresponding to the audio data.

Certainly, the method for obtaining the audio fingerprint data by the audio processing module 41 in this embodiment of the present disclosure is not limited to the foregoing obtaining method, and another method for obtaining audio fingerprint data that represents an audio data feature and that can be obtained falls within the protection scope of the embodiments of the present disclosure.

In this embodiment, the audio fingerprint storage module 42 records audio fingerprint data of video data having a copyright, a corresponding video label, and a time parameter corresponding to the audio fingerprint data. The video label may be represented by using a video identification, for example, a sequence number or a code, for convenience of searching in the video copyright storage module 44 using the video label. The audio fingerprint data in the audio fingerprint storage module 42 may be obtained by performing audio data extraction on the video data having copyright by the audio processing module 41 using the method for extracting audio fingerprint data according to this embodiment of the present disclosure. Then the audio fingerprint data is stored in the audio fingerprint storage module 42. The description of the obtaining method is not repeated herein.

In this embodiment, if the audio fingerprint storage module 42 does not include the audio fingerprint data, it indicates that the first video data is not consistent with video data in the video copyright storage module 44. That is, it indicates that the first video data does not conflict with the video data having the copyright, and in other words, the first video data does not involve copyright conflict. Correspondingly, a process of matching the video content is not performed subsequently, and a determining result indicating that the first video data is not consistent with the video data in the video copyright storage module 44 may be directly obtained.

As shown in FIG. 3, if the audio fingerprint storage module 42 includes the audio fingerprint data, the audio processing module 41 obtains a video label and a time parameter corresponding to the audio fingerprint data. The video label may be represented by using a video identification, for example, a sequence number or a code. In an actual application, the audio fingerprint library stores a large quantity of information. To reduce a matching time and increase a matching speed without losing accuracy, a fuzzy matching method may be used. That is, in the matching process, a mount of matching hash having same audio fingerprint data and a same time difference (for example, a difference between a hash time point of inputting a video and a hash time point in the video copyright library (the video fingerprint library)) are counted, and the first N pieces of the matched audio fingerprint data are selected to form a potential matched audio segment. In a next stage, each segment of the matched audio fingerprint data is selected to analyze the density of a hash amount of the audio fingerprint data at a particular time. If the density is greater than a threshold, the segment is remained; otherwise, the segment is removed. Therefore, a hash value segment whose density is greater than the threshold is remained. In this process, a potential audio segment having a low matching density may be removed, thereby improving the matching accuracy. De-duplication selection is performed on the selected potential matching audio segment, so that for repeated audio matched in time, audio having a largest hash density is selected as final matching audio. For the matching process, one-to-one or one-to-many matching may be allowed. In this process, filtering may be performed when the hash density is analyzed, and only a segment of audio having the longest matching time is remained. The foregoing process may be referred to as a classification and filtering process, with which the final matching information is obtained.

In this embodiment, after the audio processing module 41 obtains the video label corresponding to the audio fingerprint data, the video label and the corresponding time parameter are sent to the video processing module 43. The video processing module 43 queries the video copyright storage module 44 using the video label. The video copyright storage module 44 records a key frame picture of video data having copyright, a video label, a time parameter corresponding to the key frame picture, and the like. The video processing module 43 queries the video copyright storage module 44, to obtain a first picture that is corresponding to the video label and that satisfies the time parameter, and extracts from the first video data a second picture that satisfies the time parameter. In a process of matching picture content of video data, the video copyright storage module 44 is queried according to the video label obtained by matching the audio fingerprint data, to obtain a picture collection corresponding to the video label. A picture (that is, the first picture) satisfying the time parameter obtained by matching the audio fingerprint data is read from the picture collection. Correspondingly, for the first video data, a picture (that is, the second picture) that satisfies the time parameter obtained by matching the audio fingerprint data is extracted from the first video data.

In this embodiment, the first feature parameter of the first picture and the second feature parameter of the second picture are extracted. The first feature parameter is compared with the second feature parameter to determine whether the first video data is consistent with video data in a copyright database. The video processing module 43 is configured to extract the first feature parameter of the first picture and the second feature parameter of the second picture by at least one of the following methods: a Scale-Invariant Feature Transform (SIFT) method and a Histogram of Oriented Gradient (HOG) method. Further, the video processing module 43 is configured to calculate similarity between the first feature parameter and the second feature parameter by using the SIFT method or the HOG method; and determine that the first video data is consistent with the video in the video copyright library if the similarity reaches a preset threshold.

According to the invention, before the video copyright storage module 44 is queried using the video label, in other words, in a process of establishing the video copyright storage module 44, the video processing module 43 is further configured to: extracting a picture from second video data having copyright, and store the extracted picture, a time parameter corresponding to the picture, and a video label corresponding to the picture in the video copyright storage module 44.

The video processing module 43 is configured to: perform scene recognition on the second video data, recognize and filter out a first picture collection representing scene switching in the second video data, to obtain a second picture collection; analyze a picture in the second picture collection, to obtain edge feature information of the picture; and extract a picture of which a quantity of the edge feature information reaches a preset threshold.

In the process of establishing the video copyright storage module 44, key frame picture extraction is performed on all video data having copyright. As shown in FIG. 4, the video data having copyright is input and the video processing module 43 extracts a key frame picture of the input video data. A process of extracting the key frame picture of the video data includes: first, performing scene switching detection on the video data. The scene switching detection may be performed by detecting a foreground and/or a background in the picture. If it is detected that the foregrounds and/or backgrounds of two pictures are inconsistent, it may be determined that a time point between time points corresponding to the two pictures is a scene switching time point. It may also be understood as that a first picture having an early time is the last picture of the previous scene, and the other picture having a later time is the first picture of a next scene. In this embodiment, scene recognition is performed on the input video data, and a first picture collection representing scene switching is recognized. In the process of extracting the key frame picture, first, the first picture collection is filtered out from a picture collection included in the video data, to prevent that an extracted key frame picture is at a scene switching position which may reduce accuracy of subsequent picture content matching. Further, the video processing module 43 further analyzes remaining pictures in the remaining second picture collection. The complexity of the pictures is analyzed, to extract a picture with high complexity as a key frame picture. In an implementation, picture edge feature information may be analyzed in this embodiment of the present disclosure to find out, in the second picture collection, a picture that has a large quantity of the edge feature information as the key frame picture. This is because a larger quantity of the edge feature information of a picture indicates higher complexity of the picture. In a process of matching two pictures, more complex content leads to higher matching accuracy.

In an implementation, the video processing module 43 is configured to: generate a third picture collection of pictures each of which the quantity of the edge feature information reaches the preset threshold; and extract pictures from the third picture collection at a preset time interval.

In this embodiment, there may be many pictures of which the quantity of the edge feature information is large. To reduce picture storage space and a calculation amount of feature matching, the video processing module 43 may extract a picture as a key frame picture at the preset time interval. For example, one picture is extracted every K second. This may greatly reduce a quantity of the extracted key frame pictures, greatly reduce a quantity of stored pictures and the calculation amount of feature matching, and reduce consumed calculation resources of a server.

In this embodiment, in an actual application, the audio processing module 41 and the video processing module 43 may be implemented by a central processing unit (CPU), a digital signal processor (DSP), a microcontroller unit (MCU), or a field-programmable gate array (FPGA). In an actual application, the audio fingerprint storage module 42 and the video copyright storage module 44 may be implemented by a memory in the server.

In the technical solution of this embodiment of the present disclosure, by combining audio content detection and video content detection, i.e., by primarily using audio content detection and secondarily using video content detection, as compared with the case that only video content detection is used, required calculation capabilities are greatly decreased, calculation resource consumption is reduced, and a shortcoming of copyright protection merely using an audio fingerprint is overcome, so as to meet a video copyright protection requirement.

An example of hardware of the server in this embodiment is shown in FIG. 8. The apparatus includes a processor 61, a storage medium 62, and at least one external communications interface 63. The processor 61, the storage medium 62, and the external communications interface 63 are connected to each other by using a bus 64.

It needs to be noted that, the foregoing descriptions related to the server are similar to the foregoing method descriptions. Descriptions of a beneficial effect of the server are similar to that of the method, which are not repeated here. For technical details that are not disclosed in the server embodiments of the present disclosure, one may refer to the method embodiments of the present disclosure.

A person skilled in the art should understand that the embodiments of the present disclosure may be provided as a method, a system, or a computer program product. Therefore, the present disclosure may be implemented in a form of a hardware embodiment, a software embodiment, or an embodiment combining software and hardware. Moreover, the present disclosure may be implemented in a form of a computer program product that is implemented on one or more computer-usable storage media (including but not limited to a magnetic disk memory, an optical memory, and the like) that include computer-usable program code.

The present disclosure is described with reference to flowcharts and/or block diagrams of the method, the device (the system), and the computer program product in the embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

The foregoing descriptions are merely preferred embodiments of the present disclosure, but are not used to limit the protection scope of the present invention, the scope of protection being defined by the appended claims.

## Claims

1. A video copyright detection method, comprising:
obtaining (101), by a server, first video data to be detected, and decoding, by the server, the first video data, to obtain audio data of the first video data;
analyzing (102), by the server, the audio data, to obtain audio fingerprint data corresponding to the audio data;
querying (103), by the server based on the audio fingerprint data, an audio fingerprint library;
obtaining (104), by the server, a video label and a time parameter corresponding to the audio fingerprint data if the audio fingerprint library comprises the audio fingerprint data;
querying (105), by the server, a video copyright library using the video label, to obtain a first picture that is corresponding to the video label and that satisfies the time parameter, and extracting from the first video data a second picture that satisfies the time parameter;
extracting (105), by the server, a first feature parameter of the first picture and a second feature parameter of the second picture; and
comparing (106), by the server, the first feature parameter with the second feature parameter, and determining, based on a comparison result, whether the first video data is consistent with a video in the video copyright library,
wherein before the querying, by the server, a video copyright library using the video label, the method comprises:
extracting, by the server, pictures from second video data having copyright, and, for each of the extracted pictures, storing the extracted picture, a time parameter corresponding to the picture, and a video label corresponding to the picture in the video copyright library,
wherein the extracting, by the server, pictures from second video data having copyright comprises:
performing, by the server, scene recognition on the second video data, and recognizing and filtering out a first picture collection representing scene switching in the second video data, to obtain a second picture collection;
analyzing, by the server, pictures in the second picture collection, to obtain edge feature information of the pictures in the second picture collection; and
extracting, by the server, pictures of which a quantity of the edge feature information reaches a preset threshold.

2. The method according to claim 1, wherein the extracting, by the server, pictures of which a quantity of the edge feature information reaches a preset threshold comprises:
generating, by the server, a third picture collection of pictures each of which the quantity of the edge feature information reaches the preset threshold; and
extracting, by the server, pictures from the third picture collection at a preset time interval.

3. The method according to claim 1, wherein the analyzing, by the server, the audio data, to obtain audio fingerprint data corresponding to the audio data comprises:
extracting, by the server, a feature parameter of the audio data, and obtaining, based on the feature parameter, the audio fingerprint data corresponding to the audio data.

4. The method according to claim 1, wherein the extracting, by the server, a first feature parameter of the first picture and a second feature parameter of the second picture comprises: extracting, by the server, the first feature parameter of the first picture and the second feature parameter of the second picture by at least one of the following methods:
a scale-invariant feature transform SIFT method and a histogram of oriented gradient HOG method.

5. The method according to claim 1, wherein the comparing, by the server, the first feature parameter with the second feature parameter, and determining, based on a comparison result, whether the first video data is consistent with a video in the video copyright library comprises:
calculating, by the server, similarity between the first feature parameter and the second feature parameter; and
determining that the first video data is consistent with the video in the video copyright library if the similarity reaches a preset threshold.

6. The method according to claim 1, wherein the audio fingerprint data is quantized data representing a feature parameter of the audio data.

7. A server, comprising at least one processor and a memory storing a processor-executable instruction, the instruction, when executed by the at least one processor, causing the server to perform the method according to any one of claims 1 to 6.

8. A non-volatile storage medium, storing one or more computer programs, the computer programs comprising an instruction that is executable by a possessor comprising one or more memories, the instruction, when executed by a computer, causing the computer to perform the method according to any one of claims 1 to 6.

## Patentansprüche

1. Verfahren zur Erkennung von Urheberrechten an Videos, umfassend:
Erhalten (101), durch einen Server, erster Videodaten, die erkannt werden sollen, und Dekodieren, durch den Server, der ersten Videodaten, um Audiodaten der ersten Videodaten zu erhalten;
Analyse (102) der Audiodaten durch den Server, um Audio-Fingerprint-Daten zu erhalten, die den Audiodaten entsprechen;
Abfragen (103) einer Audio-Fingerprint-Bibliothek durch den Server auf der Grundlage der Audio-Fingerprint-Daten;
Erhalten (104) eines Video-Labels und eines Zeitparameters, die den Audio-Fingerprint-Daten entsprechen, durch den Server, wenn die Audio-Fingerprint-Bibliothek die Audio-Fingerprint-Daten umfasst;
Abfragen (105) einer Videocopyright-Bibliothek durch den Server unter Verwendung des Videolabels, um ein erstes Bild zu erhalten, das dem Videolabel entspricht und das den Zeitparameter erfüllt, und Extrahieren eines zweiten Bildes aus den ersten Videodaten, das den Zeitparameter erfüllt;
Extrahieren (105), durch den Server, eines ersten Merkmalsparameters des ersten Bildes und eines zweiten Merkmalsparameters des zweiten Bildes; und
Vergleichen (106) des ersten Merkmalsparameters mit dem zweiten Merkmalsparameter durch den Server, und Bestimmen, basierend auf einem Vergleichsergebnis, ob die ersten Videodaten mit einem Video in der Videocopyright-Bibliothek übereinstimmen,
wobei das Verfahren vor der Abfrage einer Videocopyright-Bibliothek durch den Server unter Verwendung des Videolabels umfasst:
Extrahieren von Bildern aus zweiten Videodaten mit Urheberrecht durch den Server und, für jedes der extrahierten Bilder, Speichern des extrahierten Bildes, eines dem Bild entsprechenden Zeitparameters und eines dem Bild entsprechenden Videolabels in der Videocopyrig ht-Bibl iothek,
wobei das Extrahieren von Bildern aus zweiten Videodaten mit Copyright durch den Server umfasst:
Durchführen einer Szenenerkennung an den zweiten Videodaten durch den Server und Erkennen und Herausfiltern einer ersten Bildsammlung, die einen Szenenwechsel in den zweiten Videodaten darstellt, um eine zweite Bildsammlung zu erhalten;
Analysieren von Bildern in der zweiten Bildsammlung durch den Server, um Kantenmerkmalsinformationen der Bilder in der zweiten Bildsammlung zu erhalten; und
Extrahieren von Bildern durch den Server, bei denen eine Menge der Kantenmerkmalsinformationen einen vorgegebenen Schwellenwert erreicht.

2. Verfahren nach Anspruch 1, wobei das Extrahieren von Bildern, von denen eine Menge der Kantenmerkmalsinformationen einen voreingestellten Schwellenwert erreicht, durch den Server umfasst:
Erzeugen, durch den Server, einer dritten Bildsammlung von Bildern, von denen jedes die Menge der Kantenmerkmalsinformation den voreingestellten Schwellenwert erreicht; und
Extraktion von Bildern aus der dritten Bildersammlung durch den Server in einem vorgegebenen Zeitintervall.

3. Verfahren nach Anspruch 1, wobei das Analysieren der Audiodaten durch den Server, um Audio-Fingerabdruckdaten zu erhalten, die den Audiodaten entsprechen, umfasst:
Extrahieren eines Merkmalsparameters der Audiodaten durch den Server und Erhalten der den Audiodaten entsprechenden Audio-Fingerprint-Daten auf der Grundlage des Merkmalsparameters.

4. Verfahren nach Anspruch 1, wobei das Extrahieren eines ersten Merkmalsparameters des ersten Bildes und eines zweiten Merkmalsparameters des zweiten Bildes durch den Server Folgendes umfasst: Extrahieren des ersten Merkmalsparameters des ersten Bildes und des zweiten Merkmalsparameters des zweiten Bildes durch den Server mit mindestens einem der folgenden Verfahren:
eine skaleninvariante Merkmalstransformation SIFT-Methode und ein Histogramm des orientierten Gradienten HOG-Methode.

5. Verfahren nach Anspruch 1, wobei das Vergleichen des ersten Merkmalsparameters mit dem zweiten Merkmalsparameter durch den Server und das Bestimmen, basierend auf einem Vergleichsergebnis, ob die ersten Videodaten mit einem Video in der Videocopyright-Bibliothek übereinstimmen, umfasst:
Berechnen der Ähnlichkeit zwischen dem ersten Merkmalsparameter und dem zweiten Merkmalsparameter durch den Server; und
Bestimmen, dass die ersten Videodaten mit dem Video in der Videocopyright-Bibliothek übereinstimmen, wenn die Ähnlichkeit einen voreingestellten Schwellenwert erreicht.

6. Verfahren nach Anspruch 1, wobei die Audio-Fingerprint-Daten quantisierte Daten sind, die einen Merkmalsparameter der Audiodaten darstellen.

7. Server mit mindestens einem Prozessor und einem Speicher, der einen vom Prozessor ausführbaren Befehl speichert, wobei der Befehl, wenn er von dem mindestens einen Prozessor ausgeführt wird, den Server veranlasst, das Verfahren nach einem der Ansprüche 1 bis 6 durchzuführen.

8. Nichtflüchtiges Speichermedium, das ein oder mehrere Computerprogramme speichert, wobei die Computerprogramme einen Befehl umfassen, der von einem Besitzer mit einem oder mehreren Speichern ausgeführt werden kann, wobei der Befehl, wenn er von einem Computer ausgeführt wird, den Computer veranlasst, das Verfahren nach einem der Ansprüche 1 bis 6 durchzuführen.

## Revendications

1. Procédé de détection de droits d'auteur de vidéo, comprenant :
l'obtention (101), par un serveur, de premières données vidéo à détecter, et le décodage, par le serveur, des premières données vidéo, pour obtenir des données audio des premières données vidéo ;
l'analyse (102), par le serveur, des données audio, pour obtenir des données d'empreintes digitales audio correspondant aux données audio ;
l'interrogation (103), par le serveur sur la base des données d'empreintes digitales audio, d'une bibliothèque d'empreintes digitales audio ;
l'obtention (104), par le serveur, d'une étiquette de vidéo et d'un paramètre de temps correspondant aux données d'empreintes digitales audio si la bibliothèque d'empreintes digitales audio comprend les données d'empreintes digitales audio ;
l'interrogation (105), par le serveur, d'une bibliothèque de droits d'auteur de vidéo en utilisant l'étiquette de vidéo, pour obtenir une première image qui correspond à l'étiquette de vidéo et qui satisfait le paramètre de temps, et l'extraction, à partir des premières données vidéo, d'une deuxième image qui satisfait le paramètre de temps ;
l'extraction (105), par le serveur, d'un premier paramètre de caractéristique de la première image et d'un deuxième paramètre de caractéristique de la deuxième image ; et
la comparaison (106), par le serveur, du premier paramètre de caractéristique au deuxième paramètre de caractéristique, et la détermination, sur la base d'un résultat de comparaison, si les premières données vidéo sont cohérentes avec une vidéo dans la bibliothèque de droits d'auteur de vidéo,
dans lequel, avant l'interrogation, par le serveur, d'une bibliothèque de droits d'auteur de vidéo en utilisant l'étiquette de vidéo, le procédé comprend :
l'extraction, par le serveur, d'images à partir de deuxièmes données vidéo présentant des droits d'auteur et, pour chacune des images extraites, le stockage de l'image extraite, d'un paramètre de temps correspondant à l'image, et d'une étiquette de vidéo correspondant à l'image dans la bibliothèque de droits d'auteur de vidéo,
dans lequel l'extraction, par le serveur, d'images à partir de deuxièmes données vidéo présentant des droits d'auteur comprend :
la réalisation, par le serveur, d'une reconnaissance de scène sur les deuxièmes données vidéo, et la reconnaissance et le filtrage d'une première collection d'images représentant un changement de scène dans les deuxièmes données vidéo, pour obtenir une deuxième collection d'images ;
l'analyse, par le serveur, d'images dans la deuxième collection d'images, pour obtenir des informations de caractéristique de bord des images dans la deuxième collection d'images ; et
l'extraction, par le serveur, d'images pour lesquelles une quantité des informations de caractéristique de bord atteint un seuil prédéfini.

2. Procédé selon la revendication 1, dans lequel l'extraction, par le serveur, d'images pour lesquelles une quantité des informations de caractéristique de bord atteint un seuil prédéfini comprend :
la génération, par le serveur, d'une troisième collection d'images pour chacune desquelles la quantité des informations de caractéristique de bord atteint le seuil prédéfini ; et
l'extraction, par le serveur, d'images à partir de la troisième collection d'images à un intervalle de temps prédéfini.

3. Procédé selon la revendication 1, dans lequel l'analyse, par le serveur, des données audio pour obtenir des données d'empreintes digitales audio correspondant aux données audio comprend :
l'extraction, par le serveur, d'un paramètre de caractéristique des données audio et l'obtention, sur la base du paramètre de caractéristique, des données d'empreintes digitales audio correspondant aux données audio.

4. Procédé selon la revendication 1, dans lequel l'extraction, par le serveur, d'un premier paramètre de caractéristique de la première image et d'un deuxième paramètre de caractéristique de la deuxième image comprend l'extraction, par le serveur, du premier paramètre de caractéristique de la première image et du deuxième paramètre de caractéristique de la deuxième image par au moins l'une des méthodes suivantes :
une méthode SIFT de transformation de caractéristique qui ne varie pas en fonction d'une échelle et une méthode HOG d'histogramme de gradient orienté.

5. Procédé selon la revendication 1, dans lequel la comparaison, par le serveur, du premier paramètre de caractéristique au deuxième paramètre de caractéristique, et la détermination, sur la base d'un résultat de comparaison, si les premières données vidéo sont cohérentes avec une vidéo dans la bibliothèque de droits d'auteur de vidéo comprennent :
le calcul, par le serveur, d'une similarité entre le premier paramètre de caractéristique et le deuxième paramètre de caractéristique ; et
la détermination que les premières données vidéo sont cohérentes avec la vidéo dans la bibliothèque de droits d'auteur de vidéo si la similarité atteint un seuil prédéfini.

6. Procédé selon la revendication 1, dans lequel les données d'empreintes digitales audio sont des données quantifiées représentant un paramètre de caractéristique des données audio.

7. Serveur comprenant au moins un processeur et une mémoire stockant une instruction exécutable par processeur, l'instruction, lorsqu'elle est exécutée par l'au moins processeur, amenant le serveur à réaliser le procédé selon l'une quelconque des revendications 1 à 6.

8. Support de stockage non volatil, stockant un ou plusieurs programmes informatiques, les programmes informatiques comprenant une instruction qui est exécutable par un processeur comprenant une ou plusieurs mémoires, l'instruction, lorsqu'elle est exécutée par un ordinateur, amenant l'ordinateur à réaliser le procédé selon l'une quelconque des revendications 1 à 6.
